# EUROPÄISCHE PATENTANMELDUNG

(11) **EP 1 783 152 A2**
(43) Veröffentlichungstag der Anmeldung: **09.05.2007**
(21) Anmeldenummer: 06122890.4
(22) Anmeldetag: 25.10.2006
(51) Int. Cl.: C08G 18/79, C08G 18/48, F16L 59/14, B29C 44/32

(54) **Gedämmte Rohre**

(30) Priorität: 04.11.2005 DE 102005053101
(71) Anmelder: BASF AKTIENGESELLSCHAFT, 67056 Ludwigshafen (DE)
(72) Erfinder: Grieser-Schmitz, Christof, 49076, Osnabrück (DE); Lindemann, Wilhelm, 32361 Preussisch Oldendorf (DE)

(57) **Zusammenfassung**

Verfahren zur diskontinuierlichen Herstellung von gedämmten Rohren, umfassend die Schritte:
1) Bereitstellen von Mediumrohr und Mantelrohr, wobei das Mediumrohr innerhalb des Mantelrohrs angeordnet ist,
2) Herstellung eines Polyisocyanuratschaumstoffes durch Umsetzung einer Isocyanatkomponente (a) mit einer Polyolmischung (b) zwischen Mediumrohr und Mantelrohr,

dadurch gekennzeichnet, dass die Polyolmischung (b) keine Polyesteralkohole enthält und eine Viskosität von kleiner als 1300 mPas, gemessen nach DIN 53019 bei 20°C, aufweist.

## Beschreibung

Die Erfindung betrifft Verfahren zur diskontinuierlichen Herstellung von gedämmten Rohren, umfassend die Schritte:
1) Bereitstellen von Mediumrohr und Mantelrohr, bevorzugt jeweils mit einer Länge von größer 5 m, besonders bevorzugt zwischen 5 und 16 m, insbesondere zwischen 5,4 und 12 m, insbesondere bevorzugt zwischen 5,7 m und 10 m, wobei das Mediumrohr innerhalb des Mantelrohrs angeordnet ist,
2) Herstellung eines Polyisocyanuratschaumstoffes, der gegebenenfalls Polyurethanstrukturen enthalten kann, durch Umsetzung einer Isocyanatkomponente
   (a) mit einer Polyolmischung (b) zwischen Mediumrohr und Mantelrohr,
      wobei die Polyolmischung (b) keine Polyesteralkohole enthält und eine Viskosität von kleiner als 1300 mPas, bevorzugt kleiner 1000 mPas, besonders bevorzugt kleiner 700 mPas, insbesondere kleiner 670 mPas, jeweils gemessen nach DIN 53019 bei 20°C, aufweist. Des weiteren bezieht sich die Erfindung auf derart erhältliche gedämmte Rohre.

Mit Polyisocyanurat (im Folgenden auch als PIR bezeichnet) - und/oder Polyurethan (PUR) - schaumstoffen gedämmte Rohre sind im Stand der Technik bekannt und beispielsweise in DE-A 10 2004 001 317, DD 142 807, EP-A-865 893 und DE-A-197 42 012 beschrieben.

Der überwiegende Anteil an vorgedämmten Rohren, die PUR-Schaum zur Dämmung nutzen, wird mit Hilfe der diskontinuierlichen Rohr-in-Rohr Produktion hergestellt.

Im Rahmen dieses Verfahrens wird das Mediumrohr (in der Regel Stahl) mit sternförmigen Abstandshaltern versehen, die der Zentrierung des inneren Rohres dienen. Das Mediumrohr wird in das äußere Hüllrohr geschoben (in der Regel Polyethylen oder Metallblech), so dass sich ein Ringspalt zwischen beiden Rohren ergibt. Aufgrund seiner hervorragenden Dämmeigenschaften wird dieser Ringspalt mit Polyurethanschaum gefüllt. Hierfür wird das leicht geneigte Doppelrohr mit Abschlusskappen versehen, die mit Entlüftungslöchern ausgestattet sind. Anschließend wird in den Ringspalt mittels einer Polyurethandosiermaschine das flüssige Reaktionsgemisch eingefüllt welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist.

Für industrielle Anwendungen, insbesondere Solaranlagen und Heißdampftransportleitungen (Temperaturen > 180°C), reicht die Temperaturstabilität von Standard PUR-Schäumen nicht aus. Für die Dämmung bei sehr hohen Temperaturen eignet sich insbesondere PIR-Schaum aufgrund seiner hervorragenden Dämmeigenschaften und der großen Temperaturstabilität der im Schaum enthaltenen Isocyanurat-Gruppen. Die PIR-Bildung erfolgt über einen stark temperaturgesteuerten Mechanismus, was zu einem schwer beeinflussbaren Reaktionsprofil bei der Schaumbildung führt. Der Ablauf der Reaktion führt dazu, dass der reagierende Schaum sehr schlechte Fließeigenschaften aufweist. Beim diskontinuierlichen Verschäumen von Rohren sind aufgrund der Länge der Rohre gerade diese sehr wichtig, um eine ausreichende Füllung sowie die gewünschten physikalischen Eigenschaften zu erreichen. In der Vergangenheit zeigte sich, dass die Reaktion nur unzureichend zu beeinflussen war und es erhebliche Schwierigkeiten gab Rohre von 6m-Länge zu füllen.

Aufgabe der Erfindung war es daher, ein Verfahren zur Herstellung von gedämmten Rohren auf der Basis von PIR-Schaumstoff zu entwickeln, mit dem auch Rohre von 6 m Länge verschäumt werden können. Dabei sollte der erhältliche Schaum eine möglichst geringe Rohdichte bei sehr guter Rohdichteverteilung aufweisen. Zudem sollte die maschinentechnische Verarbeitbarkeit verbessert, insbesondere die Verschäumung bei Rohr-Temperaturen < 40°C ermöglicht werden. Außerdem sollte ein Mischungsverhältnis von weniger als 250 Gew.-Teile Isocyanatkomponente pro 100 Gew.-Teile Polyolmischung zugänglich sein.

Diese Aufgaben konnten durch die eingangs dargestellten gedämmten Rohre sowie das eingangs beschriebene Verfahren gelöst werden.

Durch die erfindungsgemäß eingestellte Viskosität der Polyolmischung wird insbesondere ein sehr gute Vorverteilung des Reaktionssystems im Rohrspalt erreicht, bevor das Reaktionsgemisch beginnt aufzuschäumen. Polyol-Komponenten mit hohen Gesamtviskositäten können sich zwar durch ein gutes Fließen beim Aufschäumen auszeichnen, man findet jedoch eine schlechte Vorverteilung im Rohrspalt. Die Erkenntnis, dass es sich um zwei unabhängig voneinander zu betrachtende Prozesse beim Ausschäumen des Rohres handelt, hat nun erstmalig zur Entwicklung von Systemen mit niedriger Viskosität geführt, die sich neben einem ausreichenden Fließverhalten durch eine hervorragende Vorverteilung auszeichnen. Der Einsatz dieser Systeme führt zu diversen Vorteilen:
- 1.: Produktion von längeren Rohrsegmenten, insbesondere von 6 m-Rohren ist möglich.
- 2.: Abgesenkte Gesamtrohdichte (Rohr 60,3/125mm Einschussdichte < 125 möglich).
- 3.: Verbesserte Temperaturbeständigkeit des Schaums.
- 4.: Bessere Kernrohdichteverteilung (Differenz RD Anfang/Ende < 15 kg/m³).
- 5.: Bessere maschinentechnische Verarbeitbarkeit.
- 6.: Verschäumung bei Rohr-Temperaturen (Medium und Außenmantel) < 40°C möglich.
- 7.: Mischungsverhältnis kleiner 250 Teile Isocyanatkomponente pro 100 Teile Polyolmischung möglich.

Aufgrund des Einsatzes der erfindungsgemäßen Polyolkomponenten konnten erstmalig 6m-lange Rohre mit gewünschter, nicht zu hoher Gesamtrohdichte und einer sehr homogenen Schaumstruktur gefüllt und mit einem Poylisocyanuratschaum verschäumt werden. Mit den bislang bekannten PIR-Systemen waren derart lange Rohrstücke lediglich mit schlechter Schaumqualitäten (sehr vielen Lunker, Überwälzungen und Inhomogenitäten) und höheren Rohdichten > 125 kg/m³ zu erreichen. Die Vorteile des vorliegenden PIR-Systems bestehen somit zum einen darin, überhaupt 6 m lange Rohre "vernünftig" herstellen und zudem Rohdichten < 125 kg/m³ aufgrund der guten Vorverteilung erzielen zu können. Das erfindungsgemäße Ergebnis ist ein PIR-Schaum mit hervorragenden Hochtemperatureigenschaften.

In einer bevorzugten Ausführungsform weist die Schicht aus Dämmmaterial eine Kernrohdichte von 45 bis 100 kg/m³, bevorzugt von 55 bis 90 kg/m³, besonders bevorzugt von 60 bis 85 kg/m³ auf. Mit Kernrohdichte ist hier die niedrigste Rohdichte an einem beliebigen Rohrquerschnitt gemeint.

Bevorzugt sind gedämmte Rohre, bei denen die eingesetzte Polyolmischung bestehend aus (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe eine Viskosität von kleiner als 1300 mPas, bevorzugt kleiner 1000 mPas, besonders bevorzugt kleiner 700 mPas, insbesondere kleiner 670 mPas, jeweils gemessen nach DIN 53019 bei 20°C, aufweist. Entsprechend wird in dem erfindungsgemäßen Verfahren bevorzugt eine Polyolmischung eingesetzt, die (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe enthält. Dabei weist die Polyolmischung bestehend aus (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe bevorzugt eine Viskosität von kleiner als 1300 mPas, bevorzugt kleiner 1000 mPas, besonders bevorzugt kleiner 700 mPas, insbesondere kleiner 670 mPas, jeweils gemessen nach DIN 53019 bei 20°C, auf.

Dabei bezieht sich diese Viskositätsangabe auf Polyolmischungen (b), die wie dargestellt keine physikalischen Treibmittel enthalten. Als Untergrenze der Viskosität haben sich Werte von 100 mPas, gemessen nach DIN 53019 bei 20°C, als sinnvoll erwiesen.

Es ist grundsätzlich auch möglich, der Polyolmischung physikalische Treibmittel hinzufügen. Die Zugabe von physikalischem Treibmittel führt jedoch zu einer signifikanten Absenkung der Viskosität. Daher beziehen sich die oben gemachten Angaben zur Viskosität der Polyolmischung (b), auch für den Fall, dass sie physikalische Treibmittel enthält, auf die Viskosität der Polyolmischung (b) ohne Zusatz von physikalischen Treibmitteln.

Die Umsetzung der Isocyanatkomponente (a) mit der Polyolmischung (b) wird man bevorzugt bei einer Kennzahl zwischen 250 und 800, bevorzugt zwischen 280 und 600, besonders bevorzugt zwischen 300 und 500, ganz besonders bevorzugt zwischen 300 und 400 durchführen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponente (b), d.h. der Polyolmischung. Bei einer Kennzahl von 100 kommt auf eine Isocyanatgruppe der Komponente (a) ein aktives Wasserstoffatom, d.h. eine gegenüber Isocyanaten reaktive Funktion, der Komponente (b). Bei Kennzahlen über 100 liegen mehr Isocyanatgruppen als OH-Gruppen vor.

Die Ausgangsstoffe werden nachfolgend ausführlich dargestellt:

Als Isocyanatkomponente (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Die Isocyanatkomponente (a) kann auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), beispielsweise bei Temperaturen von etwa 80°C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Zur Herstellung von Polyisocyanurat-Hartschaumstoffen wird insbesondere PMDI eingesetzt.

In einer bevorzugten Ausführungsform wird die Isocyanatkomponente (a) so gewählt, dass sie eine Viskosität weniger als 600 mPas, bevorzugt von 100 bis 450, besonders bevorzugt von 120 bis 370, insbesondere von 170 bis 250 mPas, gemessen nach DIN 53019 bei 25°C, aufweist.

Als Polyole (Bestandteil b1) werden erfindungsgemäß keine Polyesterpolyole eingesetzt. Bevorzugt kommen erfindungsgemäß Polyetheralkohole zum Einsatz. In Betracht kommen z.B. Verbindungen mit mindestens zwei gegenüber Isocyanat reaktiven Gruppen, das heißt mit mindestens zwei mit Isocyanatgruppen reaktiven Wasserstoffatomen. Beispiele hierfür sind Verbindungen mit OH-Gruppen, SH-Gruppen, NH-Gruppen und/oder NH₂-Gruppen.

Als Polyole (Bestandteil b1) kommen bevorzugt Verbindungen auf Basis von Polyetherolen zum Einsatz. Die Funktionalität der Polyetherole beträgt im allgemeinen 1,9 bis 8, bevorzugt 2,2 bis 6, besonders bevorzugt 2,4 bis 5, ganz besonders bevorzugt 2,6 bis 4,0.

Die Polyole (b1) weisen bevorzugt eine Hydroxylzahl von größer als 25, vorzugsweise größer als 30 mg KOH/g, bevorzugt größer als 35 mg KOH/g, KOH/g auf. Als Obergrenze der Hydroxylzahl hat sich im allgemeinen 1000 mg KOH/g, bevorzugt 800 mg KOH/g, besonders 600, ganz besonders 500 mg KOH/g bewährt.

Bevorzugt enthält Komponente (b1) Polyetherpolyole, die nach bekannten Verfahren, beispielsweise durch anionische Polymerisation mit Alkalihydroxiden, wie Natrium-oder Kaliumhydroxid oder Alkalialkoholaten, wie Natriummethylat, Kaliummethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohohle in Betracht, wie beispielsweise Glycerin, Trimethylolpropan (TMP), Pentaerythrit, Saccharose, Sorbit, Propylenglykol (PG) sowie Amine, wie beispielsweise Methylamin, Ethylamin, Isopropylamin, Butylamin, Benzylamin, Anilin, Toluidin, Toluoldiamin (TDA), Naphtylamin, Ethylendiamin, Diethylentriamin, 4,4'-Methylendianilin, 1,3-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Trimethylolpropan (TMP), Glycerin und/oder Propylenglykol (PG) verwendet.

Die Polyolmischung kann optional als Bestandteil (b2) Katalysatoren enthalten. Als Katalysatoren (b2) werden üblicherweise Verbindungen verwendet, welche die PUR-und/oder PIR-Reaktion beschleunigen.

In Betracht kommen bevorzugt organische Zinnverbindungen, wie Zinn-(II)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan. Die Katalysatoren werden im allgemeinen in einer Menge von 0,001 bis 5 Gew.-%, insbesondere von 0,05 bis 3,5 Gew.-% Katalysator, bezogen auf das Gewicht der Komponente (b), eingesetzt.

Bevorzugt wird die Umsetzung in Gegenwart von Katalysatoren durchgeführt, die die Bildung von Polyisocyanuratstrukturen katalysieren. Als bevorzugte Verbindungen, die die Bildung von Isocyanuratstrukturen katalysieren (PIR-Katalysatoren), können Kaliumacetat, Kaliumformiat und/oder Kaliumoctoat, besonders bevorzugt Kaliumacetat eingesetzt werden. Bevorzugt werden diese Katalysatoren in Mengen zwischen 0,001 Gew.-% und 4,5 Gew.-%, bezogen auf das Gesamtgewicht der Polyolmischung, eingesetzt. Diese PIR-Katalysatoren werden bevorzugt in der Polyolkomponente eingesetzt.

Zusätzlich zu diesen bevorzugten PIR-Katalysatoren können weitere Katalysatoren eingesetzt werden, z.B. Katalysatoren die die Bildung von Polyurethanstrukturen beschleunigen.

In dieser Schrift gilt im Zweifel die CAS-Nummer als eindeutige chemische Bezeichnung.

Bevorzugt wird als Katalysator (b2) auch Glycin, N-((2-Hydroxy-5-nonylphenyl)methyl)-N-methyl-mononatrium Salz (CAS-Nummer 56968-08-2), (2-Hydroxypropyl)-trimethylammonium-2-ethylhexanoat (CAS-Nummer 62314-22-1), 1-Propanammonium-2-hydroxy-N,N,N-trimethyl-formiat, Trimethylhydroxypropylammoniumformiat, 2-((2-Dimethylamino)ethyl)methylamino)ethanol (CAS-Nummer 2212-32-0) und/oder N,N',N"-Tris(dimethylamino-propyl)hexahydrotriazin (CAS-Nummer 15875-13-5) eingesetzt.

Besonders bevorzugt wird man vor der Umsetzung der Isocyanatkomponente (a) mit der Polyolmischung (b) zwischen 0,01 und 3,5 Gew.-% N,N',N"-Tris(dimethylaminopropyl)hexahydrotriazin (CAS-Nummer 15875-13-5) in die Polyolmischung (b) mischen, wobei sich die Gewichtsangaben auf das Gesamtgewicht der Polyolmischung (b) enthaltend N,N',N"-Tris(dimethylamino-propyl)hexahydrotriazin bezieht.

Besonders bevorzugt ist ferner, dass man zusätzlich zu N,N',N"-Tris(dimethylaminopropyl)hexahydrotriazin (CAS-Nummer 15875-13-5) als Katalysator (b2) auch Dimethylcyclohexylamin (CAS-Nummer 98-94-2) einsetzt.

Besonders bevorzugt wird man vor der Umsetzung der Isocyanatkomponente (a) mit der Polyolmischung (b) zwischen 0,01 und 3,5 Gew.-% Dimethylcyclohexylamin in die Polyolmischung (b) mischen, wobei sich die Gewichtsangaben auf das Gesamtgewicht der Polyolmischung (b) enthaltend Dimethylcyclohexylamin bezieht.

Insbesondere wird man als Katalysatoren Kaliumacetat, Kaliumformiat und/oder Kaliumoctoat, besonders bevorzugt Kaliumacetat, sowie N,N',N"-Tris(dimethylaminopropyl)hexahydrotriazin (CAS-Nummer 15875-13-5) in der Polyolmischung (b) einsetzen.

Die Polyolmischung kann ferner optional als Bestandteil (b3) chemische Treibmittel enthalten. Als chemische Treibmittel sind Wasser oder Carbonsäuren, insbesondere Ameisensäure als chemisches Treibmittel bevorzugt. Das chemische Treibmittel wird im allgemeinen in einer Menge von 0,1 bis 5 Gew.-%, besonders bevorzugt von 0,2 bis 4,0 Gew.-%, insbesondere von 0,3 bis 3,0 Gew.-%, bezogen auf das Gewicht der Komponente (b), eingesetzt.

Wie vorstehend erwähnt kann die Polyolmischung physikalisches Treibmittel enthalten. Darunter versteht man Verbindungen, die in den Einsatzstoffen der Polyisocyanurat-und/oder Polyurethan-Herstellung gelöst oder emulgiert sind und unter den Bedingungen der Polyisocyanurat- und/oder Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten b) eingesetzt. Besonders bevorzugt wird als Treibmittel Pentan, insbesondere Cyclopentan eingesetzt. Insbesondere enthält die Polyolmischung somit als physikalisches Treibmittel Cyclopentan. Das Cyclopentan wird bevorzugt in einer Menge von mehr als 3,0 Gew-%, besonders bevorzugt mehr als 6,0 Gew.-%, ganz besonders bevorzugt mehr als 10,0 Gew.-%, insbesondere mehr als 12,0 Gew.-%, bezogen auf das Gesamtgewicht der Polyolmischung, eingesetzt.

In einer bevorzugten Ausführungsform enthält die Polyolmischung (b) als Bestandteil (b4) Vernetzer. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer werden im allgemeinen in einer Menge von 1 bis 10 Gew.-%, bevorzugt von 2 bis 6 Gew.-%, bezogen auf das Gesamtgewicht der Polyolmischung (b) (jedoch ohne physikalische Treibmittel), eingesetzt.

In einer weiteren bevorzugten Ausführungsform enthält die Polyolmischung (b) als Bestandteil (b5) Kettenverlängerungsmittel, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel werden im allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel), eingesetzt.

Die Komponenten (b4) und (b5) können in der Polyolmischung einzeln oder in Kombination eingesetzt werden.

In einer bevorzugten Ausführungsform werden die Komponenten (a) und (b) des Polyisocyanuratsystems so gewählt werden, dass der resultierende Schaumstoff eine Druckfestigkeit (bei Rohdichte 60 kg/m³) von größer 0,25 N/mm², bevorzugt größer 0,30 N/mm², besonders bevorzugt größer 0,35 N/mm², gemessen nach DIN 53421, aufweist. Idealerweise werden Rohre hergestellt, die Druckfestigkeiten > 0,3 N/mm² besitzen und der EN 253 entsprechen. Mit dem erfindungsgemäßen Polyisocyanuratschaumstoff, der gegebenenfalls Polyurethanstrukturen enthaltend kann, können gedämmte Rohre mit einer Zentrierung des Mediumrohres erzielt werden, die die Anforderungen nach Tabelle 7 - Koaxialitätstoleranz in Abhängigkeit vom Nennaußendurchmesser, EN 253:2003 erfüllen.

Dem erfindungsgemäßen Polyisocyanuratsystem können gegebenenfalls auch noch Zusatzstoffe (b6) einverleibt werden. Unter Zusatzstoffe (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen bevorzugten Viskositätsbereiche der Komponente (b) sich auf eine Polyolmischung (b) inklusive gegebenenfalls zugesetzter Zusatzstoffe (b6) (aber exklusive gegebenenfalls zugesetztem physikalischem Treibmittel) beziehen. Bevorzugt setzt man als Zusatzstoff zwischen 1 und 25 Gew.-% Flammschutzmittel, bezogen auf das Gesamtgewicht der Polyolmischung, ein. Zur Herstellung der erfindungsgemäßen Schäume können als Flammschutzmittel vorzugsweise halogenfreie Flammschutzmittel eingesetzt werden. Hierfür kommen insbesondere in Frage: Ammoniumpolyphosphat, Aluminiumhydroxid, Isocyanuratderivate und Carbonate von Erdalkalimetallen. Vorzugsweise eingesetzt werden Phosphate, wie z.B. Triethlyphosphat (TEP - CAS-Nr. 78-40-0), Diphenyltolylphosphat (DPK - CAS-Nr. 26444-49-5), Phosphonate, wie z.B. Diethyl-N.N-di(2-hydroxyethyl)aminomethyl-phosphonat, Melamin, Melaminderivate wie z.B. Melamincyanurat und/oder Gemische aus Melamin und Blähgraphit. Natürlich sind auch erfindungsgemäße Schaumstoffe herstellbar, wenn neben den bevorzugt eingesetzten halogenfreien Flammschutzmitteln weitere in der Polyurethanchemie bekannte halogenhaltige Flammschutzmittel verwendet bzw. mitverwendet werden, wie beispielsweise Trikresylphosphat, Tris-(2-chlorethyl)phosphat, Tris(2-chlor-1-methylethyl)phosphat (TCPP - CAS-Nr. 13674-84-5), Tetrakis-(2-chlorethyl)-ethylendi-phosphat, Dimethylmethanphosphonat, Diethanolaminomethylphosphonsäurediethylester, 2,2 Dimethylpropan-1-ol-Tribromderivat (CAS-Nr. 36483-57-5), sowie handelsübliche halogenhaltige Flammschutzpolyole. Außer den bereits genannten halogensubstituierten Phosphaten können auch weitere anorganische oder organische Flammschutzmittel, wie roter Phosphor, Aluminiumoxidhydrat, Antimontrioxid, Arsenoxid, Calciumsulfat, Maisstärke. Als Flammschutzmittel kommen bevorzugt TCPP, besonders bevorzugt für halogenfreie PIR-Schäume DPK und/oder TEP zum Einsatz.

Die erfindungsgemäßen Polyisocyanuratsysteme finden bevorzugt zur Herstellung von gedämmten Rohren, beispielsweise von Industrierohren, Anwendung. Gegenstand der Erfindung ist somit die Verwendung des erfindungsgemäßen Polyisocyanuratsystems zur Herstellung von gedämmten Rohren.

In einer bevorzugten Ausführungsform wird das erfindungsgemäße Polyisocyanuratsystem zur Herstellung von gedämmten Verbundmantelrohre gemäß DIN EN 253 verwendet.

Bei dem Mediumrohr (i) handelt es sich im allgemeinen um ein Stahlrohr mit einem Außendurchmesser von 1 bis 120 cm, bevorzugt 4 bis 110 cm.

Auf der Außenseite des Mediumrohres angeordnet ist eine Schicht aus Dämmmaterial (ii), enthaltend den erfindungsgemäßen Polyisocyanuratschaumstoff. Diese Schicht weist im allgemeinen eine Dicke von 1 bis 25 cm, bevorzugt 2 bis 15 cm auf.

Bevorzugt wird man die Umsetzung der Isocyanatkomponente mit der Polyolkomponente bei einer Verdichtung von kleiner 4, bevorzugt kleiner 3,5, besonders bevorzugt kleiner 3, ganz besonders bevorzugt kleiner 2,8 durchführen. Unter Verdichtung versteht man den Quotienten aus der Gesamtfülldichte des Rohrspaltes dividiert durch die freigeschäumte Kernrohdichte bestimmt an einem unverdichteten Schaumkörper.

In einer weiteren bevorzugten Ausführungsform weist die Schicht aus Dämmmaterial (ii), enthaltend den erfindungsgemäßen Polyisocyanuratschaumstoff eine Wärmeleitfähigkeit von weniger als 28 mW/mK, bevorzugt von 20 bis 27,0, besonders bevorzugt 20 bis 26 gemessen nach EN ISO 8497 auf.

Das Mantelrohr (iii) umgibt die Schicht aus Dämmmaterial und besteht im allgemeinen aus Kunststoff oder Metall, beispielsweise aus Polyethylen oder Wickelfalzblech, und weist üblicherweise eine Dicke von 1 bis 30 mm auf. Der Innendurchmesser des Mantelrohrs beträgt im allgemeinen 6 bis 140 cm, bevorzugt 10 bis 120 cm. Bevorzugt wird man als Mantelrohr ein Winkelfalzblech, d.h. ein spiralförmig aufgewickeltes Blech, einsetzen. Alternativ ist es bevorzugt möglich, als Mantelrohr ein Rohr auf der Basis von thermoplastischem Kunststoff, z.B. Polyethylen einzusetzen.

Das Mantelrohr bevorzugt bestehend aus Kunststoff (iii) kann gegebenenfalls aus mehreren Schichten bestehen, die beim Extrusionsvorgang zusammengeführt werden. Ein Beispiel hierfür ist das Einbringen von mehrlagigen Folien zwischen PUR-Schaumstoff und PE-Mantel, wobei die Folie zur Verbesserung der Sperrwirkung mindestens eine metallische Lage enthält.

Beim Wickelfalzrohr kann ebenfalls durch geeignete konstruktive Maßnahmen eine Folie zwischen PIR-Schaum und Blech eingebracht werden.

Geeignete Mantelrohre dieses Typs sind in EP-A-960 723 beschrieben.

In einer besonders bevorzugten Ausführungsform handelt es sich bei dem gedämmten Rohr um ein gedämmtes Verbundmantelrohr, welches die Anforderungen von DIN EN 253 erfüllt.

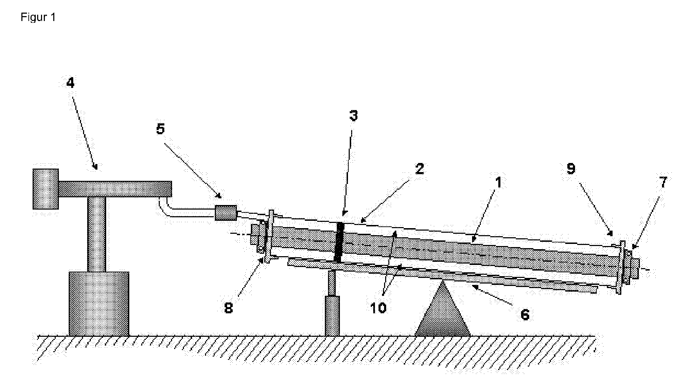

Das erfindungsgemäße Verfahren wird beispielhaft anhand von Figur 1 veranschaulicht. In Figur 1 bedeutet:
- 1: Mediumrohr
- 2: Mantelrohr
- 3: Abstandhalter
- 4: PUR-Schäumanlage
- 5: Mischkopf
- 6: neigbarer Schäumtisch
- 7: Schelle
- 8: Dichtung
- 9: Endkappe mit Entlüftungslöchern
- 10: Ringspalt

In einem Verfahren gemäß Figur 1 handelt es sich um ein diskontinuierliches Verfahren. Im Rahmen dieses Verfahrens wird das Mediumrohr 1 (in der Regel Stahl) mit sternförmigen Abstandshaltern 3 versehen, die der Zentrierung des inneren Rohres 2 dienen. Das Mediumrohr 1 wird in das äußere Mantelrohr 2 geschoben (in der Regel Polyethylen oder Metall), so dass sich ein Ringspalt 10 zwischen beiden Rohren ergibt. Dieser Ringspalt wird aufgrund seiner guten Dämmeigenschaften mit Polyisocyanuratschaumstoff gefüllt.

Hierfür wird das üblicherweise mittels neigbarem Schäumtisch 6 leicht geneigte Doppelrohr, bevorzugt geneigt in einem Winkel von 0,01° bis 10°, bevorzugt 1,0° bis 7°, mit Abschlusskappen 9 versehen, die mit Entlüftungslöchern ausgestattet sind. Anschließend wird in den Ringspalt mittels einer Polyurethandosiermaschine 4 das flüssige Reaktionsgemisch, d.h. das erfindungsgemäße Polyisocyanuratsystem, eingefüllt welches in noch flüssiger Form im Rohrspalt hinunter fließt bis die Schaumbildungs-Reaktion einsetzt. Ab diesem Zeitpunkt findet die weitere Verteilung durch Fließen des langsam in der Viskosität ansteigenden Schaums statt, bis das Material ausreagiert ist.

In einer üblichen Ausführungsform wird das PIR-System im Rohr stark verdichtet, so dass ohne Schellen 7 die Endkappen 9 weggedrückt würden. Ohne Dichtung 8 würde Material zwischen Mediumrohr 1 und Endkappe 9 herausgedrückt. Die Entlüftungslöcher der Endkappen werden bei beginnendem Schaumaustritt mit Stopfen oder automatischen Ventilen verschlossen.

## Patentansprüche

1. Verfahren zur diskontinuierlichen Herstellung von gedämmten Rohren, umfassend die Schritte:
1) Bereitstellen von Mediumrohr und Mantelrohr, wobei das Mediumrohr innerhalb des Mantelrohrs angeordnet ist,
2) Herstellung eines Polyisocyanuratschaumstoffes durch Umsetzung einer Isocyanatkomponente (a) mit einer Polyolmischung (b) zwischen Mediumrohr und Mantelrohr,
**dadurch gekennzeichnet, dass** die Polyolmischung (b) keine Polyesteralkohole enthält und eine Viskosität von kleiner als 1300 mPas, gemessen nach DIN 53019 bei 20°C, aufweist.

2. Verfahren gemäß Anspruch 1, **dadurch gekennzeichnet, dass** die Polyolmischung (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe enthält.

3. Verfahren gemäß Anspruch 1, **dadurch gekennzeichnet, dass** die Polyolmischung bestehend aus (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe eine Viskosität von kleiner als 1300 mPas, gemessen nach DIN 53019 bei 20°C, aufweist.

4. Verfahren gemäß einem der Ansprüche 1 bis 3, **dadurch gekennzeichnet, dass** man als Zusatzstoff zwischen 1 und 25 Gew.-% Flammschutzmittel, bezogen auf das Gesamtgewicht der Polyolmischung, einsetzt.

5. Verfahren gemäß Anspruch 1, **dadurch gekennzeichnet, dass** das Mediumrohr und das Mantelrohr jeweils eine Länge von größer 5 m aufweisen.

6. Verfahren gemäß Anspruch 1, **dadurch gekennzeichnet, dass** man die Umsetzung der Isocyanatkomponente (a) mit der Polyolmischung (b) bei einer Kennzahl zwischen 250 und 800 durchführt.

7. Verfahren gemäß Anspruch 1, **dadurch gekennzeichnet, dass** man die Umsetzung bei einer Verdichtung von kleiner 4,0 durchführt.

8. Verfahren gemäß Anspruch 1, **dadurch gekennzeichnet, dass** die Polyolmischung (b) mit Cyclopentan als physikalischem Treibmittel verschäumt wird.

9. Verfahren gemäß Anspruch 1, **dadurch gekennzeichnet, dass** die Isocyanatkomponente (a) eine Viskosität kleiner 600 mPas, gemessen nach DIN 53019 bei 25°C besitzt.

10. Verfahren gemäß Anspruch 1, **dadurch gekennzeichnet, dass** man als Mantelrohr ein Wickelfalzblech einsetzt.

11. Verfahren gemäß Anspruch 1, **dadurch gekennzeichnet, dass** man als Mantelrohr ein Rohr auf der Basis von thermoplastischem Kunststoff einsetzt.

12. Gedämmtes Rohr erhältlich durch ein Verfahren gemäß einem der Ansprüche 1 bis 11.
